# EUROPEAN PATENT APPLICATION

(11) **EP 4 478 452 A1**
(43) Date of publication of application: **18.12.2024**
(21) Application number: 23755707.9
(22) Date of filing: 07.02.2023
(51) Int. Cl.: H01M 4/136

(54) **POSITIVE ELECTRODE SHEET AND LITHIUM-ION BATTERY**

(30) Priority: 15.02.2022 CN 202210139512
(71) Applicant: BYD Company Limited, Shenzhen, Guangdong 518118 (CN)
(72) Inventor: LIU, Jiamin, Shenzhen, Guangdong 518118 (CN); CHEN, Sanzhi, Shenzhen, Guangdong 518118 (CN); DU, Mengyi, Shenzhen, Guangdong 518118 (CN); HAO, Rong, Shenzhen, Guangdong 518118 (CN)
(74) Representative: Arnold & Siedsma
(86) International application number: PCT/CN2023/074704
(87) International publication number: WO 2023/155704

(57) **Abstract**

A positive electrode sheet includes a positive electrode current collector and a positive electrode active material layer arranged on at least a surface of the positive electrode current collector. The positive electrode active material layer includes a positive electrode active material, which includes a first lithium iron phosphate material and a second lithium iron phosphate material. When the cumulative volume distribution percentage of the first lithium iron phosphate material is 50%, the particle size is D¹ᵥ50 µm. When the cumulative volume distribution percentage of the second lithium iron phosphate material is 50%, the particle size is D²ᵥ50 µm. where 0.3 ≤ D¹ᵥ50≤0.95, 1.0≤D²ᵥ50≤3.5. When the volume density of the positive electrode active material reaches a maximum value, the particle size is Dₘₒ µm, the compaction density of the positive electrode sheet is PD g/cm³, and 0.45 ≤ PD x Dₘₒ≤ 12.38.

## Description

### CROSS-REFERENCE TO RELATED APPLICATIONS

The present application claims priority to Chinese Patent Application No. 202210139512.0 filed on February 15, 2022 and entitled "Positive electrode sheet and lithium-ion battery", which is incorporated herein by reference in its entirety.

### FIELD

The present application relates to the field of lithium-ion batteries, and specifically to a positive electrode sheet and a lithium-ion battery.

### BACKGROUND

Lithium iron phosphate material has wide use due to the high safety, low cost, environmental friendliness and other advantages. However, the lithium iron phosphate material also has obvious defects. That is, the compaction density of the lithium iron phosphate material is low, which leads to the low energy density of batteries prepared with the lithium iron phosphate material, so the demand for batteries with long battery life cannot be met. To improve the energy density of the battery, a lithium iron phosphate material having high compaction density is needed. However, when the compaction density of the lithium iron phosphate material is increased, the electrochemical performance of the battery is often reduced.

### SUMMARY

In a first aspect, the present application provides a positive electrode sheet, which includes: a positive electrode current collector and a positive electrode active material layer arranged on at least a side surface of the positive electrode current collector. The positive electrode active material layer includes a positive electrode active material, and the positive electrode active material includes a first lithium iron phosphate material and a second lithium iron phosphate material. When the cumulative volume distribution percentage of the first lithium iron phosphate material is 50%, the corresponding particle size is D¹ᵥ50 µm. When the cumulative volume distribution percentage of the second lithium iron phosphate material is 50%, the corresponding particle size is D²ᵥ50 µm. D¹ᵥ50 is in the range of 0.3-0.95, and D²ᵥ50 is in the range of 1.0-3.5. When the volume density of the positive electrode active material reaches a maximum value, the corresponding particle size is Dₘₒ µm. The compaction density of the positive electrode sheet is PD g/cm³ under a pressure of 1.5 Mpa, and PD meets: 0.45≤PD x Dₘₒ≤12.38.

In some embodiments of the present disclosure, PD is in the range of 2.25-2.85.

In some embodiments of the present disclosure, PD is in the range of 2.3-2.7.

In some embodiments of the present application, PD is in the range of 2.35-2.7.

In some embodiments of the present application, D¹ᵥ50 of the first lithium iron phosphate material is in the range of 0.35-0.65, and D²ᵥ50 of the second lithium iron phosphate material is in the range of 1.25-2.85.

In some embodiments of the present application, PD x Dₘₒ is in the range of 0.6-10.5.

In some embodiments of the present application, Dₘₒ is in the range of 0.2-4.5.

In some embodiments of the present application, Dₘₒ is in the range of 0.3-4.2.

In some embodiments of the present application, when the cumulative volume distribution percentage of the positive electrode active material is 50%, the corresponding particle size is Dᵥ50 µm (median particle size), and Dᵥ50 is in the range of 0.2-3.1.

In some embodiments of the present application, the mixing weight ratio of the first lithium iron phosphate material and the second lithium iron phosphate material is in the range of 1: (1-9).

In some embodiments of the present application, the first lithium iron phosphate material has a carbon coating layer on the surface and/or the second lithium iron phosphate material has a carbon coating layer on the surface.

In some embodiments of the present application, the positive electrode active material layer further includes a binder and a conductive agent. The compaction density of the positive electrode sheet is in the range of 2.25-2.75 g/cm³ under a pressure of 1.5 Mpa.

In some embodiments of the present application, the positive electrode active material layer is formed by coating a positive electrode paste including the positive electrode active material, the conductive agent, the binder and a solvent on the positive electrode current collector.

In a second aspect, the present application provides a lithium-ion battery. The lithium-ion battery includes a positive electrode sheet as described in the first aspect of the present application.

In some embodiments of the present application, the lithium-ion battery further includes a negative electrode sheet, and an electrolyte solution and a separator located between the positive electrode sheet and the negative electrode sheet.

### BRIEF DESCRIPTION OF THE DRAWINGS

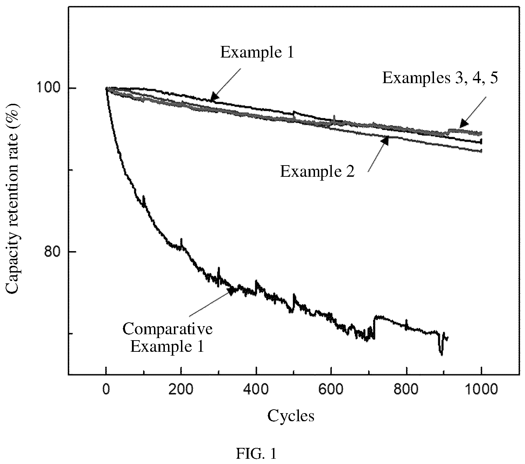

FIG. 1 shows a cycle performance curve of each pouch battery of Examples 1 to 5 and Comparative Example 1 of the present application.

### DETAILED DESCRIPTION

The foregoing descriptions are some implementations of the present application. It should be noted that several improvements and modifications can be made by those of ordinary skill in the art without departing from the principle of the present application, which shall fall within the protection scope of the present application.

The present application provides a positive electrode sheet and a preparation method thereof. By the present application, the positive electrode sheet is ensured to have a high compaction density, and a battery prepared therewith has good electrochemical performance.

In a first aspect, the present application provides a positive electrode sheet, which includes: a positive electrode current collector and a positive electrode active material layer arranged on at least a side surface of the positive electrode current collector. The positive electrode active material layer includes a positive electrode active material, and the positive electrode active material includes a first lithium iron phosphate material and a second lithium iron phosphate material. When the cumulative volume distribution percentage of the first lithium iron phosphate material is 50%, the corresponding particle size is D¹ᵥ50 µm. When the cumulative volume distribution percentage of the second lithium iron phosphate material is 50%, the corresponding particle size is D²ᵥ50 µm. D¹ᵥ50 is in the range of 0.3-0.95, and D²ᵥ50 is in the range of 1.0-3.5. When the volume density of the positive electrode active material reaches a maximum value, the corresponding particle size is Dₘₒ µm. The compaction density of the positive electrode sheet is PD g/cm³ under a pressure of 1.5 Mpa, and PD meets: 0.45≤PD x Dₘₒ≤12.38.

In the present application, two lithium iron phosphate materials having different particle sizes are used, and the mixing ratio of the two lithium iron phosphate materials is adjusted such that the particle size Dₘₒ of the positive electrode active material obtained after mixing and the compaction density PD of the positive electrode sheet meet a certain relation formula. This ensures that the positive electrode sheet has an appropriately high compaction density and the electrochemical performance (especially cycle performance) of a battery prepared with the positive electrode sheet is excellent. The particle size D¹ᵥ50 of the first lithium iron phosphate material, the particle size D²ᵥ50 of the second lithium iron phosphate material, and the particle size Dₘₒ of the positive electrode active material can each be obtained from their respective laser particle size distribution diagrams. The test method can be found in GB/T 19077-2016/ISO 13320:2009 Particle size analysis-Laser diffraction methods. The test instrument is a laser particle size analyzer (such as Malvern 3000). When the cumulative volume distribution percentage of a material is 50%, the corresponding particle size is referred to as median particle size of the material. PD can be obtained by testing the positive electrode sheet by a compaction machine.

In some embodiments of the present application, PD is in the range of 2.25-2.85. In this case, while the positive electrode sheet meets the condition that PD x Dₘₒ is in the range of 0.45-12.38, the positive electrode sheet has large compaction density and appropriate porosity, and the battery has even better cycle performance and rate performance.

In some embodiments of the present application, PD is in the range of 2.3-2.7.

In some embodiments of the present application, PD is in the range of 2.35-2.7.

In the present application, D¹ᵥ50<D²ᵥ50. When D¹ᵥ50 of the lithium iron phosphate material is small, the lithium-ion diffusion path is relatively short, and the prepared battery has good electrical performance. When D²ᵥ50 of the lithium iron phosphate material is large, the compaction density of the positive electrode active material can be increased. When the particle sizes Dᵥ50 of the two materials are in the above ranges, by adjusting the mixing ratio of the two, the two lithium iron phosphate materials can be ensured to form a dense mass, thus improving the compaction density of the obtained positive electrode sheet without compromising the cycle performance of the battery.

In some embodiments of the present application, D¹ᵥ50 of the first lithium iron phosphate material is in the range of 0.35-0.65, and D²ᵥ50 of the second lithium iron phosphate material is in the range of 1.25-2.85.

In the present application, the compaction density PD of the positive electrode sheet and the particle size Dₘₒ of the positive electrode active material are considered in combination, rather than pursing a PD value as high as possible. The particle size of the positive electrode active material affects the electronic conductivity and ionic conductivity of the electrode sheet. Dₘₒ can indirectly reflect the content of medium- to small-sized particles (or fine powder) in the positive electrode active material particles. In the present application, by controlling 0.45 ≤ PD x Dₘₒ ≤ 12.38, while the positive electrode sheet is ensured to have an appropriately high compaction density, the overall electronic conductivity and ion conductivity of the positive electrode sheet are both excellent, and the battery has good cycle performance and rate performance.

In some embodiments of the present application, PD x Dₘₒ is in the range of 0.6-10.5. In this case, the positive electrode sheet is ensured to have high compaction density and the battery is ensured to have good electrochemical performance.

In some embodiments of the present application, Dₘₒ is in the range of 0.2-4.5. In this case, the positive electrode active material has a proper number of small- to medium-sized particles, which can ensure that the resistance of diffusion/migration of ions inside and between particles of the positive electrode active material is small, and contributes to the good rate and cycle performance of the battery.

In some embodiments of the present application, Dₘₒ is in the range of 0.3-4.2.

In some embodiments of the present application, when the cumulative volume distribution percentage of the positive electrode active material is 50%, the corresponding particle size is Dᵥ50 µm (median particle size), and Dᵥ50 is in the range of 0.2-3.1. When the median particle size of the positive electrode active material after mixing is in the above range, the positive electrode active material particles are properly piled up, the polarization intensity of the electrode sheet is low, the lithium-ion transmission speed is high during the cycle process of the battery, and the energy density of the secondary battery is high.

In the present application, the mixing weight ratio of the first lithium iron phosphate material and the second lithium iron phosphate material is not particularly limited, as long as the particle size of the positive electrode active material formed by mixing the two is ensured to meet the above relation formula.

In some embodiments of the present application, the mixing weight ratio of the first lithium iron phosphate material and the second lithium iron phosphate material is in the range of 1: (1-9), and further in the range of 1: (1-4). In this case, the positive electrode active material formed by mixing the two lithium iron phosphate materials can well ensure the high compaction density of the electrode sheet and the good cycle performance of the battery.

In some embodiments of the present application, the first lithium iron phosphate material has a carbon coating layer on the surface and/or the second lithium iron phosphate material has a carbon coating layer on the surface. The carbon coating layer can be obtained by sequentially sanding, spray drying and sintering a mixed slurry of a phosphorus source, an iron source, a lithium source and a carbon source. In the present application, the specific preparation method of the two lithium iron phosphate materials is not limited. The presence of the carbon coating layer allows the first and the second lithium iron phosphate material to have good electrical conductivity, and less side reactions with the electrolyte solution. The positive electrode active material obtained by mixing the two has good electrical conductivity, and the cycle performance of the battery is good.

According to the positive electrode sheet provided in the first aspect of the present application, by mixing two lithium iron phosphate materials meeting the requirements of specific particle size parameters, and controlling the particle size Dₘₒ of the positive electrode active material obtained by mixing the two lithium iron phosphate materials and the compaction density PD of the positive electrode sheet to meet 0.45≤PD x Dₘₒ≤12.38, the obtained positive electrode sheet can be ensured to have high compaction density and good electrochemical performances, particularly cycle performance and rate performance.

In some embodiments of the present application, the positive electrode active material layer further includes a binder and a conductive agent. The compaction density of the positive electrode sheet is in the range of 2.25-2.75 g/cm³ under a pressure of 1.5 Mpa.

In some embodiments of the present application, the positive electrode active material layer is formed by coating a positive electrode paste including the positive electrode active material, a conductive agent, the binder and a solvent on the positive electrode current collector. The solvent can be one or more of N- methylpyrrolidone (NMP), acetone and dimethyl acetamide (DMAC). The positive electrode current collector includes any one of an aluminum foil, a carbon-coated aluminum foil and a perforated aluminum foil. The conductive agent includes, but is not limited to, one or more of carbon nanotubes, graphene carbon black, carbon fiber and the like. The binder includes, but is not limited to, one or more of polyvinylidene fluoride (PVDF), polytetrafluoroethylene (PTFE), polyvinyl alcohol (PVA), styrene-butadiene rubber (SBR), polyacrylic acid (PAA), polyacrylate, polyacrylonitrile (PAN), sodium carboxymethyl cellulose (CMC) and sodium alginate.

In a second aspect, the present application provides a lithium-ion battery. The lithium-ion battery includes a positive electrode sheet as described in the first aspect of the present application.

In some embodiments of the present application, the lithium-ion battery further includes a negative electrode sheet, and an electrolyte solution and a separator located between the positive electrode sheet and the negative electrode sheet.

The lithium-ion battery using the positive electrode sheet has high energy density and excellent cycle performance.

In the following, the technical solution of the present application will be described in combination with specific embodiments.

### Example 1

A method for preparing a positive electrode sheet includes the following steps.

A first lithium iron phosphate material LFP-1 was used, where when the cumulative volume distribution percentage was 50%, the corresponding particle size was 0.55 µm, that is, D¹ᵥ50 was 0.55.

A second lithium iron phosphate material LFP-2 was used, where when the cumulative volume distribution percentage was 50%, the corresponding particle size was 1.35 µm, that is, D²ᵥ50 was 1.35.

The LFP-1 material and the LFP-2 material were mixed at a weight ratio of 2: 8, to obtain a positive electrode active material LFP-3. When the volume density of LFP-3 reached a maximum value, the corresponding particle size was 1.15 µm, that is, Dₘₒ was 1.15.

The positive electrode active material LFP-3 was prepared into a positive electrode sheet, by mixing the LFP-3 material with a binder (specifically, polyvinylidene fluoride, PVDF) and conductive carbon black at a weight ratio of 85:5:10, adding an appropriate amount of N-methyl pyrrolidone (NMP), and mixing uniformly, to obtain a positive electrode paste. The positive electrode paste was coated on two sides of a carbon-coated aluminum foil, and dried, to obtain a two-sided positive electrode sheet. The compaction density of the positive electrode sheet was 2.45 g/cm³ under a press of 1.5 Mpa, that is, PD was 2.45. PD x Dₘₒ of the positive electrode sheet was 2.82.

Preparation of pouch lithium-ion battery: The positive electrode sheet prepared with the positive electrode active material LFP-3 in Example 1 was used as a positive electrode. A graphite electrode sheet was used as a negative electrode. A polypropylene film was used as a separator. A solution containing 1.0 mol/L LiPF₆ in ethylene carbonate (EC): dimethyl carbonate (DMC)=1:1 (volume ratio) was used as an electrolyte solution. After assembly, a pouch battery was obtained.

### Example 2

Different from the method in Example 1, a method for preparing a positive electrode sheet includes the following steps:
A first lithium iron phosphate material LFP-1 was used, where when the cumulative volume distribution percentage was 50%, the corresponding particle size was 0.66 µm, that is, D¹ᵥ50 was 0.66.

A second lithium iron phosphate material LFP-2 was used, where when the cumulative volume distribution percentage was 50%, the corresponding particle size was 1.75 µm, that is, D²ᵥ50 was 1.75.

The LFP-1 material and the LFP-2 material were mixed at a weight ratio of 1:9, to obtain a positive electrode active material LFP-3. When the volume density of LFP-3 reached a maximum value, the corresponding particle size was 1.68 µm, that is, Dₘₒ was 1.68.

Following the method described in Example 1, the positive electrode active material LFP-3 obtained in Example 2 was prepared into a positive electrode sheet. The compaction density of the positive electrode sheet was 2.59 g/cm³ under a press of 1.5 Mpa, that is, PD was 2.59. PD x Dₘₒ of the positive electrode sheet was 4.35.

### Example 3

Different from the method in Example 1, a method for preparing a positive electrode sheet includes the following steps:
A first lithium iron phosphate material LFP-1 was used, where when the cumulative volume distribution percentage was 50%, the corresponding particle size was 0.43 µm, that is, D¹ᵥ50 was 0.43.

A second lithium iron phosphate material LFP-2 was used, where when the cumulative volume distribution percentage was 50%, the corresponding particle size was 1.05 µm, that is, D²ᵥ50 was 1.05.

The LFP-1 material and the LFP-2 material were mixed at a weight ratio of 3:7, to obtain a positive electrode active material LFP-3. When the volume density of LFP-3 reached a maximum value, the corresponding particle size was 0.78 µm, that is, Dₘₒ was 0.78.

Following the method described in Example 1, the positive electrode active material LFP-3 obtained in Example 3 was prepared into a positive electrode sheet. The compaction density of the positive electrode sheet was 2.37 g/cm³ under a press of 1.5 Mpa, that is, PD was 2.37. PD x Dₘₒ of the positive electrode sheet was 1.85.

### Example 4

Different from the method in Example 1, a method for preparing a positive electrode sheet includes the following steps:
A first lithium iron phosphate material LFP-1 was used, where when the cumulative volume distribution percentage was 50%, the corresponding particle size was 0.35 µm, that is, D¹ᵥ50 was 0.35.

A second lithium iron phosphate material LFP-2 was used, where when the cumulative volume distribution percentage was 50%, the corresponding particle size was 1.79 µm, that is, D²ᵥ50 was 1.79.

The LFP-1 material and the LFP-2 material were mixed at a weight ratio of 4:6, to obtain a positive electrode active material LFP-3. When the volume density of LFP-3 reached a maximum value, the corresponding particle size was 1.22 µm, that is, Dₘₒ was 1.22.

Following the method described in Example 1, the positive electrode active material LFP-3 obtained in Example 4 was prepared into a positive electrode sheet. The compaction density of the positive electrode sheet was 2.63 g/cm³ under a press of 1.5 Mpa, that is, PD was 2.63. PD x Dₘₒ of the positive electrode sheet was 3.21.

### Example 5

Different from the method in Example 1, a method for preparing a positive electrode sheet includes the following steps:
A first lithium iron phosphate material LFP-1 was used, where when the cumulative volume distribution percentage was 50%, the corresponding particle size was 0.47 µm, that is, D¹ᵥ50 was 0.47.

A second lithium iron phosphate material LFP-2 was used, where when the cumulative volume distribution percentage was 50%, the corresponding particle size was 1.48 µm, that is, D²ᵥ50 was 1.48.

The LFP-1 material and the LFP-2 material were mixed at a weight ratio of 1:1, to obtain a positive electrode active material LFP-3. When the volume density of LFP-3 reached a maximum value, the corresponding particle size was 1.14 µm, that is, Dₘₒ was 1.14.

Following the method described in Example 1, the positive electrode active material LFP-3 obtained in Example 5 was prepared into a positive electrode sheet. The compaction density of the positive electrode sheet was 2.67 g/cm³ under a press of 1.5 Mpa, that is, PD was 2.67. PD x Dₘₒ of the positive electrode sheet was 3.04.

### Example 6

Different from the method in Example 1, a method for preparing a positive electrode sheet includes the following steps:
A first lithium iron phosphate material LFP-1 was used, where when the cumulative volume distribution percentage was 50%, the corresponding particle size was 0.91 µm, that is, D¹ᵥ50 was 0.91 µm.

A second lithium iron phosphate material LFP-2 was used, where when the cumulative volume distribution percentage was 50%, the corresponding particle size was 2.32 µm, that is, D²ᵥ50 was 2.32 µm.

The LFP-1 material and the LFP-2 material were mixed at a weight ratio of 2:8, to obtain a positive electrode active material LFP-3. When the volume density of LFP-3 reached a maximum value, the corresponding particle size was 3.78 µm, that is, Dₘₒ was 3.78.

Following the method described in Example 1, the positive electrode active material LFP-3 obtained in Example 6 was prepared into a positive electrode sheet. The compaction density of the positive electrode sheet was 2.56 g/cm³ under a press of 1.5 Mpa, that is, PD was 2.56 g/cm³. PD x Dₘₒ of the positive electrode sheet was 9.68.

### Example 7

Different from the method in Example 1, a method for preparing a positive electrode sheet includes the following steps:
A first lithium iron phosphate material LFP-1 was used, where when the cumulative volume distribution percentage was 50%, the corresponding particle size was 0.91 µm, that is, D¹ᵥ50 was 0.91 µm.

A second lithium iron phosphate material LFP-2 was used, where when the cumulative volume distribution percentage was 50%, the corresponding particle size was 3.24 µm, that is, D²ᵥ50 was 3.24 µm.

The LFP-1 material and the LFP-2 material were mixed at a weight ratio of 3:7, to obtain a positive electrode active material LFP-3. When the volume density of LFP-3 reached a maximum value, the corresponding particle size was 3.89 µm, that is, Dₘₒ was 3.89 µm.

Following the method described in Example 1, the positive electrode active material LFP-3 obtained in Example 7 was prepared into a positive electrode sheet. The compaction density of the positive electrode sheet was 2.53 g/cm³ under a press of 1.5 Mpa, that is, PD was 2.53 g/cm³. PD x Dₘₒ of the positive electrode sheet was 9.84.

### Example 8

Different from the method in Example 1, a method for preparing a positive electrode sheet includes the following steps:
A first lithium iron phosphate material LFP-1 was used, where when the cumulative volume distribution percentage was 50%, the corresponding particle size was 0.89 µm, that is, D¹ᵥ50 was 0.89 µm.

A second lithium iron phosphate materialLFP-2 was used, where when the cumulative volume distribution percentage was 50%, the corresponding particle size was 3.21 µm, that is, D²ᵥ50 was 3.21 µm.

The LFP-1 material and the LFP-2 material were mixed at a weight ratio of 1:9, to obtain a positive electrode active material LFP-3. When the volume density of LFP-3 reached a maximum value, the corresponding particle size was 4.41 µm, that is, Dₘₒ was 4.41 µm.

Following the method described in Example 1, the positive electrode active material LFP-3 obtained in Example 8 was prepared into a positive electrode sheet. The compaction density of the positive electrode sheet was 2.61g/cm³ under a press of 1.5 Mpa, that is, PD was 2.61g/cm³. PD x Dₘₒ of the positive electrode sheet was 11.51.

To highlight the beneficial effects of the present application, the following comparative examples are provided.

### Comparative Example 1

Different from the method in Example 1, a method for preparing a positive electrode sheet includes the following steps:
A first lithium iron phosphate material LFP-1 was used, where when the cumulative volume distribution percentage was 50%, the corresponding particle size was 0.45 µm, that is, D¹ᵥ50 was 0.45.

A second lithium iron phosphate material LFP-2 was used, where when the cumulative volume distribution percentage was 50%, the corresponding particle size was 3.45 µm, that is, D²ᵥ50 was 3.45.

The LFP-1 material and the LFP-2 material were mixed at a weight ratio of 3:7, to obtain a positive electrode active material LFP-3. When the volume density of LFP-3 reached a maximum value, the corresponding particle size was 4.98 µm, that is, Dₘₒ was 4.98.

Following the method described in Example 1, the positive electrode active material LFP-3 obtained in Comparative Example 1 was prepared into a positive electrode sheet. The compaction density of the positive electrode sheet was 2.56 g/cm³ under a press of 1.5 Mpa, that is, PD was 2.56. PD x Dₘₒ of the positive electrode sheet was 12.75, which fell outside the range of 0.45-12.38 in the present application.

### Comparative Example 2

Different from the method in Example 1, a method for preparing a positive electrode sheet includes the following steps:
A first lithium iron phosphate material LFP-1 was used, where when the cumulative volume distribution percentage was 50%, the corresponding particle size was 1.04 µm, that is, D¹ᵥ50 was 1.04, which fell outside the range of 0.3-0.95 defined in the present application.

A second lithium iron phosphate material LFP-2 was used, where when the cumulative volume distribution percentage was 50%, the corresponding particle size was 3.74 µm, that is, D²ᵥ50 was 3.74, which fell outside the range of 1.0-3.5 defined in the present application.

The LFP-1 material and the LFP-2 material were mixed at a weight ratio of 8:2, to obtain a positive electrode active material LFP-3. When the volume density of LFP-3 reached a maximum value, the corresponding particle size was 2.96 µm, that is, Dₘₒ was 2.96 µm.

Following the method described in Example 1, the positive electrode active material LFP-3 obtained in Comparative Example 2 was prepared into a positive electrode sheet. The compaction density of the positive electrode sheet was 2.53 g/cm³ under a press of 1.5 Mpa, that is, PD was 2.53g/cm³. PD x Dₘₒ of the positive electrode sheet was 7.49.

To provide powerful support for the beneficial effects of the present application, The pouch battery of each example and comparative example were tested for the following electrochemical performance.

1) Cycle performance: Each pouch battery was subjected to charge-discharge cycle test at 0.5C/0.5C at 25°C. The voltage range was 2.0-3.8V. During charging, the battery was charged to 3.8 V at a constant current of 0.5C and then charged to a cut-off current of 0.05 C at a constant voltage. The first-cycle coulombic efficiency and the capacity retention rate after 1000 charge-discharge cycles were tested.

2) Discharge capacity per gram of positive electrode active material: In a voltage range of 2.0-3.8 V, the positive electrode active material of each example and comparative example was charged to 3.8 V at a constant current of 0.1C, and then to a cut-off current of 0.05 C at a constant voltage. Then, the positive electrode active material was discharged to 2.0 V at a constant current of 0.1C. The charge and discharge process was repeated 3 times. The discharge capacity of the 3 rd time was recorded as Co, Co dividing the weight of LFP-3 in each example and comparative example was the capacity per gram of LFP-3.

FIG. 1 shows a cycle performance curve of each pouch battery in Embodiments 1 to 5 and Comparative Embodiment 1. The first-cycle coulombic efficiency, the capacity retention rate after 1000 cycles, and other data of the batteries of each example and comparative example are summarized in Table 1 below.

**Table 1**

| Test item | First-cycle coulombic efficiency (%) | Discharge capacity per gram (mAh/g) | Capacity retention rate after 1000 cycles (%) |
|---|---|---|---|
| Example 1 | 98.5 | 150 | 93.8 |
| Example 2 | 98.6 | 152 | 92.5 |
| Example 3 | 98.7 | 153 | 94.6 |
| Example 4 | 97.9 | 147 | 94.7 |
| Example 5 | 98.0 | 151 | 94.6 |
| Example 6 | 98.2 | 152 | 92.7 |
| Example 7 | 98.4 | 149 | 93.1 |
| Example 8 | 98.1 | 149 | 92.9 |
| Comparative Example 1 | 91.1 | 129 | 65.1 |
| Comparative Example 2 | 89.2 | 134 | 78.9 |

As can be seen from FIG. 1 and Table 1, the positive electrode sheet prepared by the method provided in the present application has a higher compaction density, and the electrochemical performance of a battery assembled with the positive electrode sheet is excellent. For example, the first-cycle coulombic efficiency can be greater than 96%, the positive electrode has a high capacity per gram, and the capacity retention rate after 1000 cycles is still above 90%. However, the first-cycle coulombic efficiency and cycle performance of the batteries of Comparative Examples 1-2 are poor, and far inferior to the battery according to the present application.

The foregoing embodiments show only several implementations of the present application and are described in detail, which, however, are not to be construed as a limitation to the scope of the present application. It is to be understood that for a person of ordinary skill in the art, several variations and improvements can be made without departing from the idea of the present application, which are all contemplated in the protection scope of the present application. Therefore, the protection scope of the present application shall be defined by the appended claims.

## Claims

1. A positive electrode sheet, comprising:
a positive electrode current collector; and
a positive electrode active material layer arranged on at least a side surface of the positive electrode current collector, the positive electrode active material layer comprising a positive electrode active material, and the positive electrode active material comprising:
a first lithium iron phosphate material; and
a second lithium iron phosphate material,
wherein when the cumulative volume distribution percentage of the first lithium iron phosphate material is 50%, the corresponding particle size is D¹ᵥ50 µm, when the cumulative volume distribution percentage of the second lithium iron phosphate material is 50%, the corresponding particle size is D²ᵥ50 µm, D¹ᵥ50 is in the range of 0.3-0.95, and D²ᵥ50 is in the range of 1.0-3.5; when the volume density of the positive electrode active material reaches a maximum value, the corresponding particle size is Dₘₒ µm; and the compaction density of the positive electrode sheet is PD g/cm³ under a pressure of 1.5 Mpa, and PD meets: 0.45≤PD x Dₘₒ≤12.38.

2. The positive electrode sheet according to claim 1, wherein PD is in the range of 2.25-2.85.

3. The positive electrode sheet according to claim 1 or 2, wherein PD is in the range of 2.3-2.7.

4. The positive electrode sheet according to any one of claims 1 to 3, wherein PD is in the range of 2.35-2.7.

5. The positive electrode sheet according to any one of claims 1 to 4, wherein D¹_{y}50 of the first lithium iron phosphate material is in the range of 0.35-0.65, and D²ᵥ50 of the second lithium iron phosphate material is in the range of 1.25-2.85.

6. The positive electrode sheet according to any one of claims 1 to 5, wherein PD x Dₘₒ is in the range of 0.6-10.5.

7. The positive electrode sheet according to any one of claims 1 to 6, wherein Dₘₒ is in the range of 0.2-4.5.

8. The positive electrode sheet according to any one of claims 1 to 7, wherein Dₘₒ is in the range of 0.3-4.2.

9. The positive electrode sheet according to any one of claims 1 to 8, wherein when the cumulative volume distribution percentage of the positive electrode active material is 50%, the corresponding particle size is Dᵥ50 µm, and Dᵥ50 is in the range of 0.2-3.1.

10. The positive electrode sheet according to any one of claims 1 to 9, wherein the weight ratio of the first lithium iron phosphate material and the second lithium iron phosphate material is in the range of 1: (1-9).

11. The positive electrode sheet according to any one of claims 1 to 10, wherein the first lithium iron phosphate material has a carbon coating layer on the surface and/or the second lithium iron phosphate material has a carbon coating layer on the surface.

12. The positive electrode sheet according to any one of claims 1 to 11, wherein the positive electrode active material layer further comprises a binder and a conductive agent, wherein the compaction density of the positive electrode sheet is in the range of 2.25-2.75 g/cm³ under a pressure of 1.5 Mpa.

13. The positive electrode sheet according to claim 12, wherein the positive electrode active material layer is formed by coating a positive electrode paste comprising the positive electrode active material, a conductive agent, the binder and a solvent on the positive electrode current collector.

14. A lithium-ion battery, comprising a positive electrode sheet according to any one of claims 1 to 13.

15. The lithium-ion battery according to claim 14, further comprising a negative electrode sheet, and an electrolyte solution and a separator located between the positive electrode sheet and the negative electrode sheet.
